Europäisches Patentamt

(19) European Patent Office

Office européen des brevets

(11) EP 0 953 823 A2

(12) **EUROPEAN PATENT APPLICATION**

(43) Date of publication:
03.11.1999 Bulletin 1999/44

(51) Int. Cl.⁶: $G01C\ 19/56$

(21) Application number: 99300043.9

(22) Date of filing: 05.01.1999

(84) Designated Contracting States:
AT BE CH CY DE DK ES FI FR GB GR IE IT LI LU
MC NL PT SE
Designated Extension States:
AL LT LV MK RO SI

(30) Priority: 01.05.1998 US 88437

(71) Applicant:
Aisin Cosmos R & D Co. Ltd.
Kariya City, Aichi Pref. (JP)

(72) Inventor: Gang, Lin
Kariya City, Aichi Pref. (JP)

(74) Representative: SERJEANTS
25, The Crescent
King Street
Leicester, LE1 6RX (GB)

(54) **Micro yaw rate sensors**

(57) Yaw rate sensors are provided, the use of which permits quantitative measurement of yaw rate. The yaw rate sensor (1;2) comprises at least a base (10), a first suspension (14) and a second suspension (16) with a proof mass (12) supported between the two suspensions, which together form a resonator. The first suspension (14) has a pair of thin-wire driving electrodes (18) double side patterned on the surfaces. When a driving voltage is applied to the driving electrodes(18), it imposes an electric field to piezoelectrically induce a driving resonance. When the sensor (1;2) is rotated around its sensing axis, the resonator will be forced to generate a sensing resonance out of the driving resonance plane to compensate the change in the linear momentum which must be conserved. The piezoelectric charge signal generated by the sensing resonance on the sensing electrodes (20) which are double side patterned on the surfaces of the second suspension (16) is used to detect the yaw rate. Specifically, the amplitude of the sensing resonance is in proportion to the yaw rate. The structure of the yaw rate sensors of this invention is suitable for mass production by lithographic micromachining techniques at low cost.

FIG. 3 A quartz yaw rate sensor

## Description

### FIELD OF THE INVENTION

This invention relates to micro yaw rate sensors suitable for measuring yaw rate around its sensing axis. More particularly, to micro yaw rate sensors fabricated with Z cut quartz wafer.

### PRIOR ART AND BACKGROUND OF THE INVENTION

A micro yaw rate sensor, which is also called micro gyro, micro gyroscope or micro vibrating angular rate sensor, is a micromachined resonator with resonance sensing capability. The operation principle of the sensor follows. A linear momentum is created by an alternate driving force which excites the resonator in an oscillation. This resonance will be called driving resonance. Conservation of linear momentum implies that the vibration is restricted to the driving resonance plane defined by driving force. However, this plane is altered when the sensor is rotated around an axis parallel to the plane but perpendicular to the movement of the resonator. The original vibration, which resists this change, compensates this change by initiating a vibration out of the driving resonance plane. The amplitude of this second vibration, which is induced by the so called Coriolis force, is proportional to the speed of rotation in the direction perpendicular to both the driving resonance plane and the axis of rotation. This secondary resonance, which will be called the sensing resonance, can be detected by electric means and is indicative of rotational speed, namely, the yaw rate.

Based on the above principles, various micro yaw rate sensors have been invented, and their descriptions are available in patent and other technical literature. For example, U. S. Patent (U.S.P.). Nos.5500549, 5635739, 5635639, 5515724, 5627314, 5331853, 5241861, 5505084, 5496436, 5408877, 5349855, 5331852, 5203208 and 5329815 describe various silicon based vibrational yaw rate sensors and their fabrication and control methods; U. S. P. Nos. 5650568, 5226321, 5696323 and 5555765, disclose vibrating wheel type yaw rate sensors; U. S. P. Nos. 5585562, 5166571, 5488863, 3839915, 4524619, 4898032 and 4538461 disclose various tuning fork type yaw rate sensors; U. S. P. Nos. 5719335 and 5719335 disclose two types of electrostatically driven rotational yaw rate sensors, and 5168756 discloses a type of electromagnetically driven rotational yaw rate sensor, U. S. P. No 5656777, 5476007, 4791815 discloses various miniature, but non micromachined vibrating yaw rate sensors and U. S. P. No. 5396797 describes yaw rate sensors formed by triaxial accelerometers.

Although many micro yaw rate sensors have been invented to date, none of them has been developed into a successful mass produced commercial product yet. With a review of the prior arts, it is apparent to those skilled in the art that most of the micro yaw rate sensors invented so far, has one or more disadvantages associated therewith, including: (a) sophisticated structure, (b) sophisticated frequency tuning and signal processing circuits, (c) expansive packaging, (d) low long term stability and reliability material, (e) high cost fabrication equipment, (f) high overall manufacturing cost.

Accordingly, there exists a need in many industries, especially in auto industry, for new micro yaw rate sensors, having the following characteristics: (a) simple structure, (b) simple driving/sensing circuitry, (c) easy to package, (d) high long term stability and reliability, (e) easy to fabricate, (f) low manufacturing cost.

### SUMMARY OF THE INVENTION

In general, the present invention provides a micro yaw rate sensor for measuring a yaw rate about its sensing axis. The sensor comprises, at least, (a) a base made of a Z cut quartz wafer; (b) a proof mass; (c) two sets of suspensions, namely, a first suspension and a second suspension, supporting said proof mass from two sides and connecting said proof mass to said base; (d) a plural number of driving electrodes patterned on said first suspension; (e) a plural number of sensing electrodes patterned on said second suspension. Said proof mass, said suspensions, and said electrodes together form an electrically excitable resonator, fabricated from/on said base wafer by micromachining technique. By impressing an alternating electric potential thereon said driving electrodes, a driving resonance will be excited within the wafer plane. When a yaw motion around the sensing axis occurs, a Coriolis force would force the resonator to resonant in the direction perpendicular to the wafer plane. Electric measurement means connected to said sensing electrodes detect electric charge signals induced by this sensing resonance which is indicative of said yaw rate.

### BRIEF DESCRIPTION OF THE DRAWINGS

FIG. 1. is a schematic representation of a Y-beam of single crystal quartz, and its piezoelectrically charged cross-sections under three loading cases.

FIG. 2. is a schematic representation of a Y-beam of single crystal quartz with six thin wire electrodes on top and bottom surfaces.

FIG. 3 is a structural representation of a quartz yaw rate sensor, made in accordance with the principles of the present invention.

FIG. 4 is an exemplary electric circuit diagram used in a quartz yaw rate sensor, made in accordance with the principles of the present invention.

FIG. 5 is a schematic representation of a first embodiment of a quartz yaw rate sensor, made in accordance with the principles of the present invention.

FIG. 6 is a schematic representation of a second embodiment of a quartz yaw rate sensor, made in accordance with the principles of the present invention.

## PRINCIPLE OF THE INVENTION

The theory underlying the vibrating yaw rate sensor is well known, and will not be discussed below. However, a short introduction has been given in the section entitled "BACKGROUND OF THE INVENTION". According to the information obtained through a review of the prior art, most micro yaw rate sensors fabricatable by regular lithography techniques are build on silicon or metallic materials. These prior art micro sensors commonly use either electrostatic or electromagnetic force to power the driving resonance, and use capacitive measurement to detect the sensing resonance. The present invention, however, provides a type of micro yaw rate sensor based on piezoelectric effect in both the driving and sensing mechanisms. This differs from all silicon based micro yaw rate sensors of the prior art. More specifically, the sensor of present invention uses a resonator made of a monocrystalline Z cut quartz wafer. The simple structure of the sensor results from unique designs of the driving and sensing electrodes, and it can work with a simple signal processing circuit, and is highly suitable for low cost mass production by micromachining.

It should be noticed here that, although the sensors of the present invention use the same quartz wafer as some of the tuning fork type yaw rate sensors of the prior art, there are several significant differences in design principle and in resonator structure between the two. Detailed discussion on these differences will be given later in the section entitled "DESCRIPTION OF PREFERRED EMBODIMENTS"

A simple introduction of monocrystalline quartz material follows (see ref). The chemical composition of quartz is $SiO_2$. The Si atoms are in four-coordination with oxygen and constitute the $(SiO_4)$ tetrahedron, which is the basic unit of the structure. Each oxygen is shared with two Si atoms. Quartz belongs to the trigonal trapezohedral class (32) of the rhombohedral subsystem. The lattice type is hexagonal. This class is characterized by one axis of three-fold symmetry and three polar axes of two-fold symmetry perpendicular thereto and separated by angles of 120 degree. There is no center of symmetry and no plane of symmetry. The axes of reference (X, Y, Z) are chosen such that X is one of the axes of two-fold symmetry and Z is the axis of three-fold symmetry. Apparently, cuffing a crystal at different planes will result in wafers with various different properties. One of the most widely used wafers is that which is cut out of a quartz crystal at the X-Y plane perpendicular to the Z axis, and is commonly called the Z cut wafer.

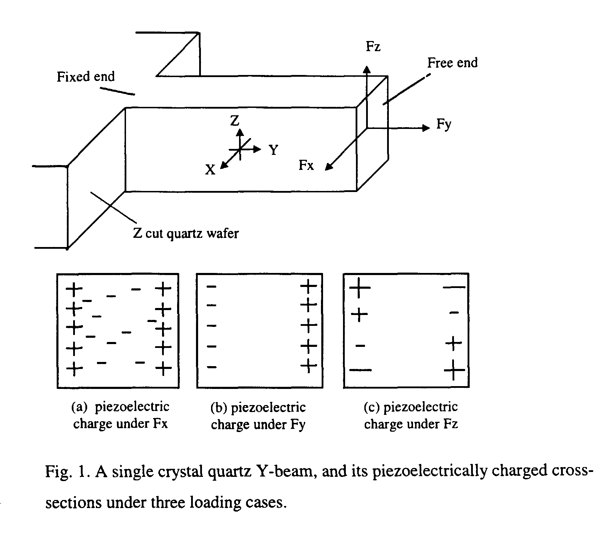

A property of quartz that has found an important application in the present invention is piezoelectricity. The piezoelectric effect comes from an atomic dipole structure of the quartz. The value of the polarizing effect of each dipole is proportional to the local stress at the dipole. This dipole describes the local piezoelectric behavior of the quartz at each atomic unit cell level well, but the global behavior is better described by the resulting charge distribution. That is, the dipoles within the material can be fully or partially neutralized by neighboring dipoles, while the dipoles at the boundaries cannot be neutralized in the same way. The consequent charge distributions are shown in figure 1 where a rectangular cross-sectioned beam extending in the Y direction fabricated out of a Z-cut quartz wafer, which is called a Y beam, is under three different loads.

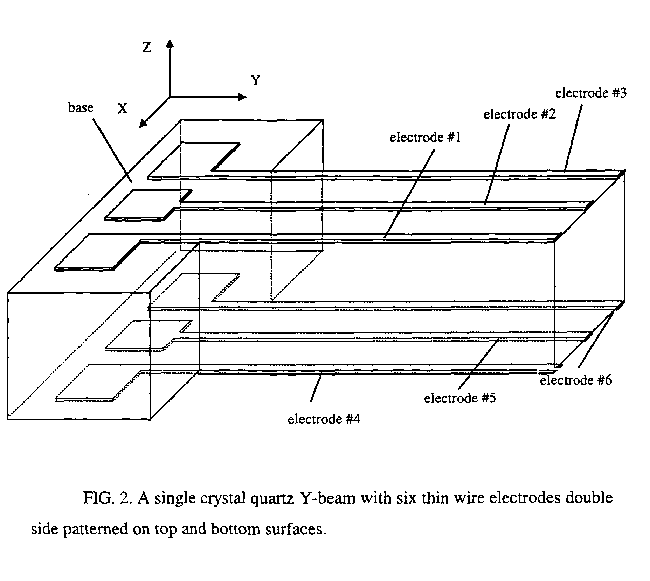

Based on the above discussion, the piezoelectric charge build-up due to external force on the Y beam can be read out through six simple thin wire electrodes shown in figure 2. Alternatively, the electrodes can be used to impose an electric field on the quartz to produce a piezoelectric force within the beam, equivalent of an external force. For instance, short circuiting symmetrical electrodes in both sides, that is connecting electrodes 1 to 4, 2 to 5 and 3 to 6, then grounding electrode 2 while imposing an electric potential on electrodes 1 and 3 can create a bending force within the beam. The tip of the beam, under this bending force, is bent over to the X direction. Apparently, this simple cantilever beam, the Y quartz beam, can be used as a simple resonator by imposing an alternating voltage on a proper pair (or pairs) of electrodes, and vice versa, it can be used as a simple accelerometer by measuring the strain caused by inertial force with proper pair (or pairs) electrodes. For instance, movement in the Z direction can be detected by $V_z = V_1 - V_4$, while resonance in the X direction can be detected by $2V_x = (V_2 - V_3) + (V_4 - V_5)$, where subscript x, y and z indicate the direction of the strain while the numerals indicate the number of the sensing electrodes.

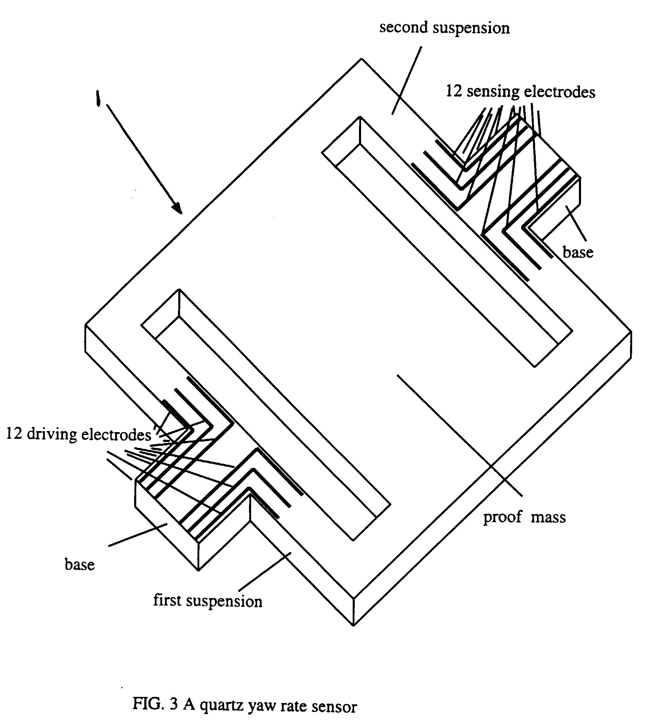

A simplified sensor structure of the present invention is a resonator micromachined on a quartz wafer shown in figure 3. It has a proof mass and two suspension beams. This simple resonator is symmetric in the x, the y, and the z direction of quartz crystal. Three thin wire driving electrodes are double side patterned along the edges and the centerlines of each beam. When an alternating voltage is applied to the driving electrodes, it piezoelectrically excites a driving resonance within the wafer plane. Now rotating the sensor around the Y axis, the Coriolis force would occur and will induce a sensing resonance at the same frequency as the driving resonance but in the direction perpendicular to the wafer plane. Since the Coriolis force increases proportionally with the resonant speed of the proof mass, the out of plane movement of the proof mass reaches its maximum value when the driving resonance reaches its maximum speed at its neutral point. In other words, the movement of the proof mass which is a combined effect of driving force and Coriolis force is an ellipse. The horizontal axis of the ellipse is in proportion to the driving force while the vertical axis is in proportion to the yaw rate. Using appropriate calculations, the effect of driving resonance and sensing resonance can be separated. The piezoelectric signals corresponding to the sensing resonance induced by Coriolis force are used to detect the yaw rate.

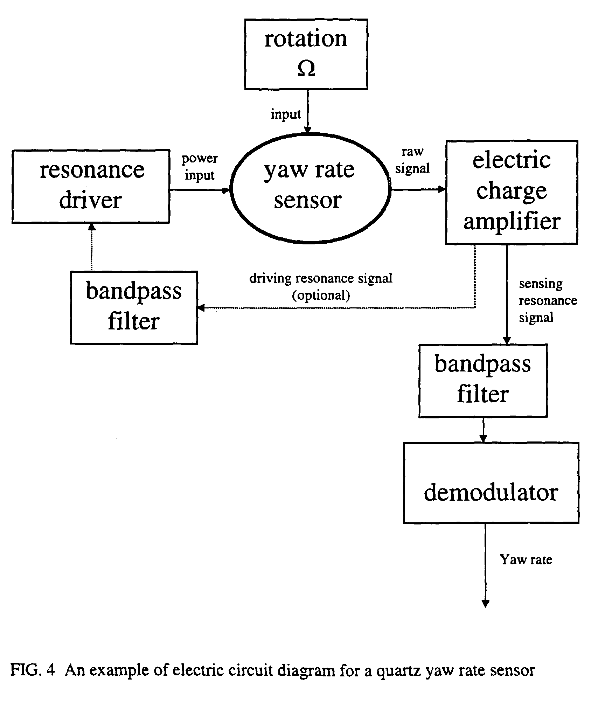

One exemplary circuit block diagram is shown in figure 4. Typical electric signals flowing through the circuits are as follows. A driver module connected to the driving electrodes generates a voltage wave $V_d = V_0 \sin(\omega t)$ at driving frequency $\omega$ to excite the resonator into the driving resonance $X_d = X_0 \sin(\omega t)$, where 0 indicates a constant value of the variables, subscript d indicates the variables related to the driving resonance while subscript s indicates the variables related to the sensing resonance. Assuming the sensor rotates at yaw rate $\Omega$, a signal amplifier module connected to the sensing electrodes picks up the piezoelectric charge signals induced by both driving and sensing resonance and convert it to voltage output. In an ideal situation where no motion other than the yaw motion exists, the converted voltage signals from the sensing electrodes are $V_d = k_s V_0 \sin(\omega t)$, and $V_s = k_d \Omega V_0 \cos(\omega t)$, where $k_s$ and $k_d$ are coefficients of sensitivity. Apparently, the Vs is a driving-frequency $\omega$ modulated signal, and its envelope, which can be obtained through a demodulator, is in proportion to $\Omega$, the yaw rate to be detected. Subsequently, a demodulator module separating the modulated low frequency signal $\Omega$ from high frequency modulating signal $k_d V_0 \cos(\omega t)$ is all it needed to readout the yaw rate. In reality, however, the yaw motion is often accompanied together with acceleration in both the X direction $(a_x)$ and the Z direction $(a_z)$. Since the acceleration would also generate piezoelectric charge in sensing electrodes, the output from the amplifier module in general become $V_d = k_d V_0 \sin(\omega t) + a_x$, and $V_s = k_s \Omega V_0 \cos(\omega t) + a_z$. In most practical applications, such as automobile stability control, acceleration imposed on the sensor is at a frequency far below that of the sensor resonance. Moreover, the portion of the signal output related to the acceleration is not modulated by the resonance frequency. Therefore, installing between the demodulator and amplifier modules a narrow band pass filter at resonance frequency, which will eliminate any signals other than those resonant frequency modulated signals, would prevent the unwanted acceleration from affecting the sensor output in most cases.

In general, the sensitivity of the sensor to yaw rate to be detected increases with (a) the Q factor of the sensing resonance, (b) the product of the amplitude and frequency of the driving resonance. While the dynamics of the sensor response to a change in yaw rate increases with the frequency of the resonance.

In summary, the present invention provides micro yaw rate sensors designed with unique thin wire driving and sensing electrodes fabricated on top and bottom surfaces of a Z cut monocrystalline quartz wafer, and it differs with all micro sensors of the prior art in driving and sensing principles as well as in resonator structure. These sensors have the following advantages: (a) a simple structure; (b) easy to fabricate with commonly available micromachining equipment; (c) operatable at wide temperature range with good temperature stability; (d) a linear response; (e) easy to process output signal; (f) easy to package; (g) good long term stability; (h) easy to adjust sensitivity and dynamic range with dimensional change of the proof mass. In summary, the sensor structure are suitable for mass production with micro-machining equipment commonly available in the semiconductor industry.

The above and other effects, features and advantages of the present invention will be apparent to those skilled in the art from the following detailed description of various embodiments thereof, in conjunction with the accompanying drawings.

## DESCRIPTION OF PREFERRED EMBODIMENTS

The basic structure of a yaw rate sensor made in accordance with the principle of the present invention comprises a base, a first suspension and a second suspension mounted on the base, a proof mass supported by two suspensions in such a manner that the first and second suspensions face each other across the proof mass. On the top and bottom surfaces of the first suspension there are driving electrodes, and on the second suspension there are sensing electrodes.

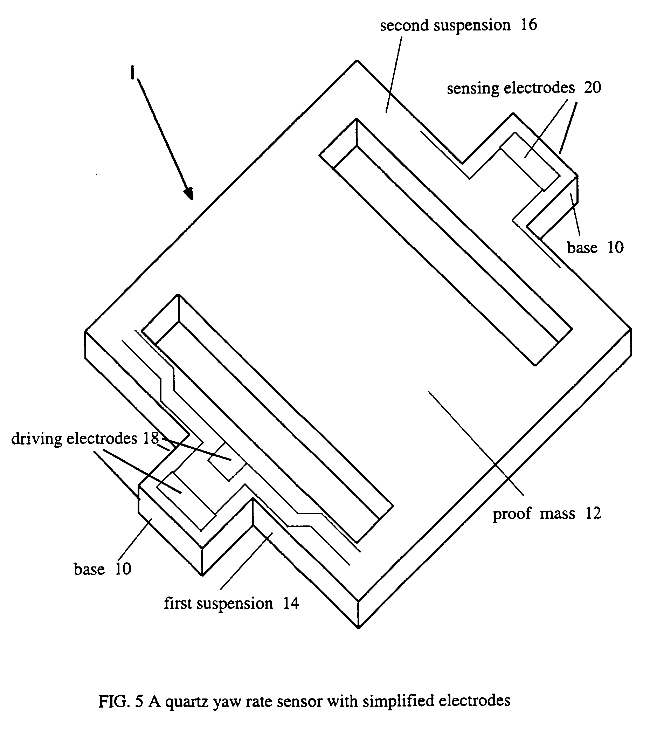

More specifically, reference is made to Fig. 5. in which is shown a first embodiment of a micro yaw rate sensor made in accordance with the principle of the present invention, and generally designated by the numeral 1. The base 10 of the sensor 1 is a Z cut monocrystalline quartz wafer. The first suspension 14 and the second suspension 16 are identical Y beams with a rectangular cross section. The proof mass and two suspensions together form a sensor resonator with sensing axis parallel to the Y axis of the crystal. The driving electrodes of the sensor are a pair of thin wires double side patterned, along the edges and centerlines, on the first suspension beam. The driving electrodes are laid out in a serpentine manner to bend the beam with higher efficiency. The sensing electrodes are two single electrodes double side patterned, along the edges, on the second suspension beam. In this embodiment, all thin electrodes have a large square electric contact pad on the base wafer for ease of electric wire connections in the packaging process.

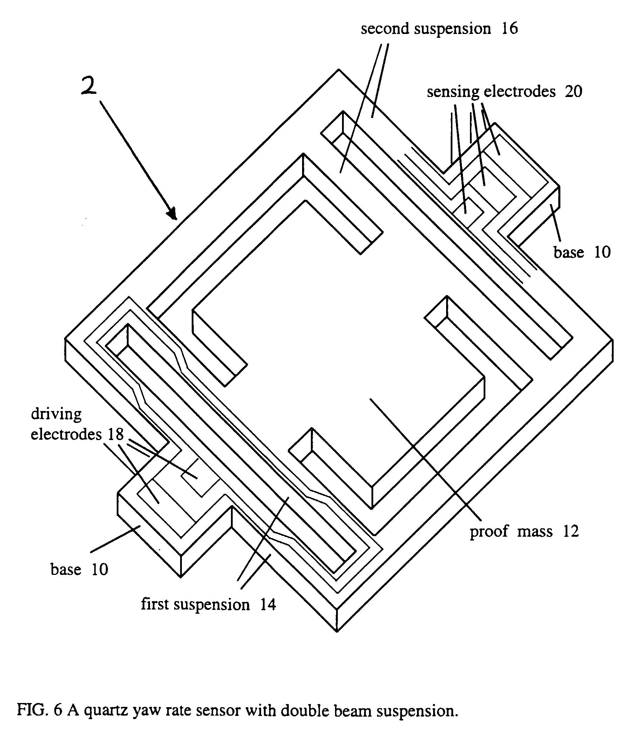

Fig. 6 shows a second embodiment of a micro yaw rate sensor, the sensor 2, made in accordance with the principles of the present invention. The number of suspension beams have been doubled in this embodiment to increase the efficiency of the driving force as well as to increase the sensitivity to the Coriolis force. As with the first embodiment, the driving electrodes are a pair of thin wires double side patterned on the first suspension beam. However, the length of the electrodes have been extended to cover the extra beam of the suspension. The serpentine shape electrodes are designed to create two opposite bending moments at different sections of the beam along longitudinal direction. The extra sensing electrodes provide additional information for functional enhancement of the sensor, such as close loop driving resonance control, acceleration detection and cancellation, etc.

The dimension of each sensor chip varies from hundreds of microns to thousands of microns, and the wafer thickness ranges from tens of microns to hundreds of microns. Generally, smaller sensors tend to be better in dynamics but large sensors tend to be higher in sensitivity.

Fabrication of typical quartz sensors of present invention, such as embodiments 1 and 2 presents no particular difficulty to those who are familiar with the arts of modem lithographic micro-machining technique. A typical fabrication process is only described here as an example of micromachining technology for ease of reference. The process follows: (a) depositing a thin Au/Cr layer on the wafer; (b) coating a photoresist on the wafer; (c) patterning (i.e. exposing and developing) the shape of resonator on photoresist with mask #1, a resonator shape mask; (d) patterning the shape of resonator on Au/Cr coat; (e) bulk-etching the shape of resonator out of the wafer; (f) coating a layer of photoresist; (g) patterning electrodes and electric connection pads with mask #2, an electrodes mask; (h) patterning the electrodes on the Au/Cr layer.

The above process is usually performed on both sides of the wafer simultaneously for manufacturing efficiency. And it should be apparent to those who are familiar with the arts that the sensors of present invention can be batch fabricated with very simple processes, and can be mass-produced more inexpensively in comparison with micro yaw rate sensors of the prior art.

Alternatively, conventional methods can also be used in fabrication of the sensors if the number of the sensors needed is too small to take advantage of the micromachining technology and the tools to machine the sensor structure are available.

It should be noted that, although the sensor of present invention uses the same quartz wafer as some of the tuning fork type yaw rate sensors of the prior art, they are totally different in resonator structure and have two significant difference in design principles. First, the tuning fork type is designed with surface electrodes, which cover two of the four surfaces of a rectangular beam, including side wall surfaces. The surface electrodes may produce stronger driving forces than the thin wire electrodes used in present invention do, but the side wall electrodes cannot be fabricated with commonly used micromachining equipment at low cost, and have less dimensional accuracy. Second, the tuning fork type sensors of the prior art require two tine resonators vibrating in opposite direction, while the sensor of present invention can operate with only one resonator which reduces sophistication in fabrication and signal processing circuitry and further lowers the cost of the sensor significantly.

Moreover, the sensor of the present invention uses a separate proof mass which can be used to adjust the dynamics of the resonator and subsequently the sensitivity and the dynamic range of the sensors. In comparison the tuning fork type sensors of the prior art use tines as both suspension and proof mass, so the dynamics of the tuning fork is decided by the length of the tine and the thickness of the wafer. In other words, the sensors of the tuning forks allow a designer only a limited range to adjust its sensitivity and dynamic range. Moreover, the packaging and mounting of sensors of the present invention has little effect on the resonator performance while the mounting of the tuning fork type sensors often is very critical to their performance, and requires frequently patented special mounting techniques.

In addition to the basic simple embodiments, the sensors can be modified by:

a) adding a single Y beam cantilever with the thin wire electrodes as sensing electrodes, on the same base wafer side by side with the sensor resonator, to upgrade the yaw rate sensor with an integrated two dimensional accelerometer.
b) adding extra signal processing circuits to calculate the acceleration so as to upgrade the yaw rate sensor with an integrated two dimensional accelerometer.
c) adding an extra resonator to further improve the resistance to external shock and mechanical noise.
d) further adding extra beams in the suspension of the resonator to have higher piezoelectric driving efficiency.
e) exchanging, with slightly modified electrodes layout, the out of plane resonance to driving resonance and in wafer plane resonance to sensing resonance.

It should be noted, that these modification will, presumably, add special features or will enhance the usefulness of the sensor in various industrial application, but they make the sensors more sophisticated and more expensive to manufacture. For practical use, an optimal shape of the driving electrodes and suspension beams is one which will minimize the driving power while creating a steady driving resonance and a highly sensitive sensing resonance.

In an industrial application, the driving and sensing circuits for the sensors of the present invention should be modularized and integrated on a single chip for ease of use. The sensor chip, or the base wafer, can be directly mounted on a printed circuit board or a plastic package to lower the cost. Alternatively, it may be packaged in an vacuum package to increase the sensitivity and to lower thermal noise.

In conclusion, the present invention provides micro yaw rate sensors which have the following desirable characteristics: (a) a simple structure; (b) easy to fabricate with common micromachining equipment; (c) operatable at wide temperature range with good temperature stability; (d) a linear response; (e) easy to process readout signal; (f) easy to package; (g) good long term stability; (h) easy to adjust sensitivity and dynamic range with dimensional change without change quartz wafer and fabrication equipment. In summary, the sensor structure are suitable for fabrication with micromachining techniques commonly used in the semiconductor industry, and they are inexpensive to manufacture.

**Claims**

1. A micro yaw rate sensor (1:2) comprising:

   a) a base substrate (10) made of piezoelectric material;
   b) a pair of crab-leg-shape suspensions, namely a first suspension (14) and a second suspension (16);
   c) a proof mass (12) connected to said base substrate (10) by said first suspension (14) and said second suspension (16) from two opposite sides;
   d) a plurality of driving electrodes (18) disposed on said first suspension (14);
   e) a plurality of sensing electrodes (20) disposed on said second suspension (16);

   CHARACTERIZED IN THAT
   an electric potential is impressed on said driving electrodes (18) to excite a driving resonance and said sensing electrodes (20) are connected to electrical measurement equipment to sense an occurrence of a sensing resonance caused by Coriolis force in direction perpendicular to said driving resonance and said sensing resonance is an indication of yaw rate.

2. A micro yaw rate sensor (1;2) according to claim 1, wherein, said base substrate (10) of piezoelectric material is a Z cut monocrystalline quartz wafer.

3. A micro yaw rate sensor (1;2) according to claim 1 or 2, wherein, said suspensions (14;16) and said proof mass (12) are carved out from said base substrate (10) by micro machining.

4. A micro yaw rate sensor (1;2) according to any preceding claim, wherein, said suspensions (14;16) have multiple parallel beams to enhance said driving resonance.

5. A micro yaw rate sensor (1;2) according to any preceding claim, wherein said driving electrodes (18) are four thin wires being double side patterned, two at each side, along the centerlines and the edges of said first suspension (14) in a serpentine manner, while said sensing electrodes (20) are two straight lines being double side patterned, one at each side, along the edges of said second suspension (16).

6. A micro yaw rate sensor (1;2) according to any preceding claim, wherein said driving electrodes (18) at one side of said base substrate (10) are connected with identical driving electrodes (18) at another side.

7. A micro yaw rate sensor (1;2) according to any preceding claim, wherein said first suspension (14) and said second suspension (16) are identical in structure and are symmetrical about the center of the proof mass (12).

8. A micro yaw rate sensor (1;2) according to any of claims 2 to 7, wherein, said suspensions (14;16) are beams extended along the Y direction of said Z cut monocrystalline quartz wafer with rectangular cross section, and said driving resonance is in the X direction while said sensing resonance is in Z the direction of said Z cut monocrystalline quartz wafer.

9. A micro yaw rate sensor (1;2) according to any of claims 2 to 8, wherein a plurality of sensing electrodes (20) being patterned on top and bottom surfaces along the edges and the centerlines of said second suspension (16) to monitor said driving resonance and to detect the acceleration in the X and Z directions of said Z cut monocrystalline quartz wafer.

10. A micro yaw rate sensor (1;2) according to any preceding claim, further comprising:

    f) an integrated circuit to perform said electric measurement and signal processing, and said integrated circuit further comprising: a) a driver module; b) a amplifier module; c) a bandpass filter module; and d) a demodulator module.

11. A micro yaw rate sensor (1;2) according to claim 10, wherein said integrated circuit further comprising: e) a signal processing module to calculate the acceleration in the X and Z directions of said Z cut monocrystalline quartz wafer.

**12.** A micro yaw sensor (1;2) according to any of claims 1 to 9, further comprising:

> f) a Y beam cantilever with double side patterned thin-wire electrodes being disposed nearby the resonator on said Z cut monocrystalline quartz wafer to add an integrated two dimensional accelerometer in the X and Z directions of the quartz crystal to said sensor.

**13.** A micro yaw rate sensor (1;2) according to any of claims 1 to 9, further comprising:

> f) an identical second resonator which resonate at same frequency but in opposite direction with said resonator to offer better redundancy, accuracy, reliability and resistance to external shock and vibration.

**14.** A micro yaw rate sensor (1;2) according to any preceding claim, wherein, said driving electrodes (18) have also been disposed on said second suspension (16) to achieve higher driving efficiency.

**15.** A micro yaw rate sensor (1;2) according to any preceding claim, wherein, said sensing electrodes (20) have also been disposed on said first suspension (14) to achieve higher accuracy and redundancy.

**16.** A micro yaw rate sensor (1;2) according to claim 8 modified to operate with said sensing resonance as driving resonance, and said driving resonance as sensing resonance.

**17.** A micro yaw rate sensor (1;2) according to any preceding claim simplified to combine two said suspensions (16;18) and said proof mass (12) into a single cantilever beam of rectangular cross-section, wherein said driving electrodes (18) and sensing electrodes (20) are all disposed on one single suspension beam.

Fig. 1. A single crystal quartz Y-beam, and its piezoelectrically charged cross-sections under three loading cases.

FIG. 2. A single crystal quartz Y-beam with six thin wire electrodes double side patterned on top and bottom surfaces.

FIG. 3 A quartz yaw rate sensor

rotation
Ω

input

resonance
driver

power
input

yaw rate
sensor

raw
signal

electric
charge
amplifier

driving resonance signal
(optional)

sensing
resonance
signal

bandpass
filter

bandpass
filter

demodulator

Yaw rate

FIG. 4  An example of electric circuit diagram for a quartz yaw rate sensor

second suspension 16

sensing electrodes 20

base 10

driving electrodes 18

proof mass 12

base 10

first suspension 14

FIG. 5 A quartz yaw rate sensor with simplified electrodes

second suspension 16

sensing electrodes 20

2

base 10

driving
electrodes 18

proof mass 12

base 10

first suspension 14

FIG. 6 A quartz yaw rate sensor with double beam suspension.